# EUROPEAN PATENT SPECIFICATION

(11) **EP 4 323 708 B1**
(45) Date of publication and mention of the grant of the patent: **04.06.2025**
(21) Application number: 22717271.5
(22) Date of filing: 07.04.2022
(51) Int. Cl.: F27B 9/02, F27B 9/20

(54) **A KILN FOR FIRING CERAMIC SLABS**
BRENNOFEN FÜR KERAMISCHE PLATTEN
FOUR SERVANT À CUIRE DES DALLES DE CÉRAMIQUE

(30) Priority: 16.04.2021 IT 202100009605
(43) Date of publication of application: 21.02.2024
(73) Proprietor: System Ceramics S.p.A., 41042 Fiorano Modenese MO (IT)
(72) Inventor: STEFANI, Franco, 41049 Sassuolo (Modena) (IT)
(74) Representative: Casadei, Giovanni
(86) International application number: PCT/IB2022/053257
(87) International publication number: WO 2022/219465

(56) References cited:
- EP-A2- 0 863 115
- WO-A1-01/71265
- CN-A- 111 351 347
- DE-A1- 102010 016 512
- US-A- 3 091 832
- US-A1- 2013 071 800

## Description

The present invention relates to a kiln for firing ceramic slabs.

In the production of ceramic tiles or slabs, each production line is configured to be able to produce only one product at a time. In practice, each product has its own specificity, especially in terms of the thermal process necessary to obtain the final product. Each type of product often needs to have different drying and firing times depending on different characteristics such as the mixture used, the format, the type of glazing and the final decoration.

Some machines that are present in the production lines of ceramic products can quickly change their configuration, like the digital printers. On the other hand, the structurally most important machine that carries out the longest part of the production process, namely the kiln, has a considerable rigidity of configuration, which requires relatively long adjustment and setting times.

Typically a kiln for ceramic slabs comprises the following four zones.

A first zone, also called "pre-kiln", in which the material is heated up to a temperature comprised between about 250° and 300°C. In this first zone, the material is introduced and prepared by progressive heating that results in the complete drying thereof, with elimination of residual humidity from the previous steps such as glazing and/or storage. This is to avoid breakages and bursts of the material during firing, because of the violent evaporation of water due to the high temperatures that can already appear in the initial zones of the first zone. The pre-kiln, despite being a functional unit separate from the kiln, has in common with the latter the roller plane that carries out a continuous transport of the material from the pre-kiln zone to the actual kiln.

A second zone, also called the "preheating" zone, in which the material is heated from about 300°C to about 500°C. In this zone some important processes take place inside the material, such as the complete elimination of water (hygroscopic and zeolitic), the evaporation and/or decomposition of part of the applied volatile organic substances and the combustion of the organic substances contained in the mixture. This zone is of particular importance for the integrity of the pieces introduced in the kiln because, if they are not properly dried, they can give rise to a too rapid evaporation with consequent "burst" of the piece itself. This phenomenon is all the more critical the higher the thickness of the pieces to be treated.

In this zone, wherein the temperatures are relatively low and obtained from the fumes taken from the subsequent heating/firing zone, the heat exchange takes place mainly by convection between the fumes and the material itself. This heat exchange is all the more effective the higher the speed of the fumes. On the other hand, as the speed of the fumes increases, high temperatures of the same are obtained at the exit of the chimneys with a consequent reduction in the thermal efficiency of the kiln. A third zone, also called the heating zone, in which the material is further heated from about 500°C to 1000°C.

Several phenomena occur in this temperature range, such as the combustion of organic substances, the transformation of the quartz, the release of constituent water, the decomposition of carbonates and the transformation of iron sulphide, if present in the mixture. It should be noted that it is in this temperature zone that the so-called "black heart" can be generated.

The convective aspect plays an important role also in this step, especially in the initial part of heating, as it favours the chemical/physical phenomena described above. In particular, the convective heat exchange promotes greater temperature uniformity inside the entire thickness of the material, i.e. a reduction of the thermal gradient in the direction of the thickness of the material.

The fourth zone is the actual firing step with temperatures exceeding 1000° C. In this zone the material is sintered, with the consequent dimensional variations. This is the zone that requires maximum flexibility in order to avoid, or at least minimize, planarity, calibration and tone defects. The overall effect of the chemical/physical transformations that take place in this sector of the kiln is a shrinkage, that is a contraction of the volume, in accordance with the characteristic vitrification curve of the mixture used. The end of firing is defined by the presence of the partition that divides the last module of the firing zone from the first rapid cooling module. The presence of this partition has the aim of preventing the passage of hot gases in the cooling zone, and, vice versa, of cold gases in the firing zone. Downstream of the firing step, there is provided a fifth zone, also called the cooling zone, inside which the temperature of the material gradually decreases in a controlled manner.

In turn, the cooling zone is divided into the following zones:
a. rapid cooling, in which the material cools relatively quickly up to about 650°C;
b. indirect cooling, in which the material cools from about 650°C to 300°C; in this zone the cooling must be sufficiently gradual so that the quartz transformation process does not cause breakages of the material;
c. final cooling, in which the material cools relatively quickly up to a temperature that is low enough to make it manageable.

All the steps described above take place with the material passing on a single transport plane, defined, as mentioned above, by motorised rollers. It should be noted that a kiln can consist of one or at most two independent channels each made with its own roller transport plane.

All the thermal energy produced inside the kiln is mainly obtained by means of burners, arranged above and/or below the roller planes and appropriately distributed along the kiln.

It is necessary that the kiln is correctly sized, depending on the productivity required and the format of the slabs to be fired, to ensure firing and cooling uniformity. Due to the increasing sizes and thicknesses of the slabs produced, there has been an increase in the firing times and consequently in the length of the kilns used. In general, current kilns have lengths of not less than 150 m, typically comprised between 180 and 200 m or more. They are therefore structures with considerable sizes, which require very bulky overall layouts and equally big buildings.

The characteristics of the current kilns do not allow an effective management of production changes, and in particular do not allow to manage, in a cost-effective way, the simultaneous production of different products. In other words, to date a change in production requires the setting of new firing parameters and the restart of the kiln for a transitional period of adaptation. A considerable amount of time therefore elapses before the start of the new production, which considerably reduces the profitability of the production plant.

Examples of known kilns, which suffers the drawbacks above summarized, are disclosed in documents EP0863115, US3091832, CN111351347.

The object of the present invention is to provide a kiln that allows to improve the flexibility of the production cycle.

One advantage of the kiln according to the present invention is that it makes it possible to efficiently and economically manage the production of slabs of different format and characteristics.

Another advantage of the kiln according to the present invention is that it makes it possible to increase the productivity of current production lines.

Additional features and advantages of the present invention will become more apparent from the following detailed description of an embodiment of the invention, illustrated by way of non-limiting example in the appended figures, in which:
- figure 1 shows a schematic sectional view on a vertical plane parallel to a longitudinal advancement direction (Y) of a kiln according to the present invention;
- figure 2 shows a schematic view of a second embodiment of the kiln according to the present invention, made in section on a vertical plane parallel to a longitudinal advancement direction (Y).

The kiln for firing ceramic slabs (L) according to the present invention comprises a heating module (2), a firing module (3), a cooling module (4), consecutively connected to one another along an advancement direction (Y) of the slabs (L).

The three modules (2,3,4) together define a process chamber (C) provided with an inlet opening (A) and an outlet opening (B). The process chamber (C) is delimited overall by a casing (11). Said casing (11) comprises a thermal insulating material. The inlet (A) and outlet (B) openings are positioned on the casing (11).

A transport system (T1,T2) is arranged along the process chamber (C) from the inlet opening to the outlet opening. The transport system (T1,T2) is structured to transport the slabs (L) along the advancement direction (Y). In essence, by means of the transport system (T1,T2), the slabs (L) are intended to transit along the process chamber (C) through each of the modules (2,3,4), first in the heating module (2), then in the firing module (3), finally in the cooling module (4).

The heating module (2) is provided to heat the slabs (L) up to a temperature of about 700°C, starting from the ambient temperature or from a temperature higher than the ambient temperature, comprised between about 100° and 250°C, in the event that the slabs (L) are subjected to an initial heating or drying, in any case not necessary. In practice, the heating module (2) can perform the slab drying step (L), in which case the slabs (L) enter the heating module (2) starting from an ambient temperature. In the event that the drying step is performed externally by the heating module (2), the slab (L) will enter the heating module (2) at a temperature comprised between about 100° and 250°C.

The heating module (2) substantially comprises a containment casing, supported by a support frame, which encloses internally a heating chamber (20), isolated with respect to the external environment. The heating module comprises at least one inlet opening, through which the slabs (L) can be introduced into the heating chamber (20), and at least one outlet opening, through which the slabs (L) can be extracted from the heating chamber (20). The heating means, known in the sector, is provided to introduce heat into the heating chamber (20), so as to cause a progressive heating of the slabs (L) according to a predetermined time trend. Such heating means may also comprise a heat recovery circuit, configured to convey to the heating module (2) at least a part of the heat transferred from the slabs (L) into the cooling module (4) and/or at least a part of the heat dispersed by the firing module (3).

The same steps as in the pre-kiln and preheating zone of a traditional firing kiln, including the first transformations of the heating step of a traditional kiln occur inside the heating module (2).

For example, inside the heating module (2) some important transformations take place in the material that forms the slabs (L), among which the elimination of the constituent water (500-600°C), the transformation of the quartz from α to β with volume increase (573°C), the combustion of the organic substances (350-650°C). The latter is extremely important, and it is essential that it can develop completely, leaving the time necessary for the gases produced in the combustion of the organic substances to escape from the slabs (L).

The heating process of the slabs (L) must take place in a controlled manner, through an increase in temperature that presents a predetermined time trend. With the same mass of material, this time trend is substantially defined by the temperature present inside the heating module (2) and by the speed with which the slabs (L) cross the heating module (2). Preferably, the temperature is not uniform inside the heating module (2), but it increases by proceeding from the inlet to the outlet. The combination between the temperature present inside the heating module (2), albeit distributed, and the advancement speed of the slabs (L) substantially defines the increase in the temperature of the slabs (L) over time, including the temperature gradient within the thickness of the slab itself. This trend will hereinafter be referred to as the heating curve.

In a preferred embodiment, the heating module (2) comprises a plurality of sub-modules (22), flanked to one another along the slab advancement direction (L). In particular, each sub-module (22) delimits, internally, a portion of the heating chamber (20).

Each sub-module (22) could be separated from the adjacent sub-modules by means of insulating partitions, provided with openings, aligned with each other along the advancement direction, to allow the transit of the slabs (L). In other words, the sub-modules (22) could be separated from each other except for the openings through which the slabs (L) transit. Each sub-module (22) comprises its own heating means, controllable independently of the heating means of the other sub-modules (22), to allow the temperature of each sub-module (22) to be adjusted. In this embodiment, by adjusting the temperature inside each sub-module (22), it is possible to precisely control the heating curve of the slabs (L) along the advancement direction. In essence, a certain temperature increase is achieved inside each sub-module (22). Overall, the sequence of sub-modules (22) defines the heating time curve of the slabs (L), from the temperature at the entry to the temperature at the exit from the heating module (2), also in relation to the advancement speed.

In practice, in order to obtain a given heating curve of the slabs (L) it is possible to define a minimum number of sub-modules (22), each of which is responsible for achieving a certain temperature leap, as part of the overall heating from the inlet to the outlet of the heating module (2).

An advantage of the heating module (2) comprising a certain number of sub-modules (22) is to be able to equip each sub-module (22) with its own air recirculation system independent of the other sub-modules (22). This air recirculation, which is not possible in traditional kilns, makes it possible to generate optimal air flows for the thermal transfer by convection from the hot fumes, taken from the firing module (3) and/or from the cooling module (4), to the slabs (L). The recirculation of the air volumes inside the sub-modules (22) is made by means known in the sector, for example fans.

The firing module (3) is provided to heat the slabs (L) from the temperature at the exit from the heating module (2) to a temperature of about 1230°C.

In the firing module (3) the processes of combustion of the organic substances and the transformation of the quartz started in the heating module (2) that precedes the firing module (3) are completed. Subsequently, in the firing module (3) the actual firing step takes place with temperatures exceeding 1000° C. In this zone the sintering of the material takes place, that is the chemical/physical transformations whose overall effect is a shrinkage, that is a contraction of the volume, in accordance with the characteristic vitrification curve of the mixture used.

The firing module (3) is also provided to perform rapid cooling of the slabs (L), from the maximum temperature reached by the slab (L) of about 1230°C to about 700°C. In practice, considering the direction of advancement of the slabs (L), inside the firing module (3) there is a heating from the temperature at the exit from the heating module (2) to about 1230°C and, after maintaining the temperature at 1230°C for the necessary time, there is a relatively rapid cooling up to about 700°C.

The firing module (3) substantially comprises a containment casing, supported by a support frame, which encloses internally a firing chamber (30), isolated with respect to the external environment. The firing module (3) comprises at least one inlet opening, through which the slabs (L) can be introduced into the firing chamber, and at least one outlet opening, through which the slabs (L) can be extracted from the firing chamber. The heating means, known in the sector, is provided to introduce heat into the heating chamber (30), so as to cause a progressive heating of the slabs (L) according to a predetermined time trend. Such heating means comprises a plurality of gas burners, known in the art, distributed in a pre-ordered manner with respect to the firing chamber. The amount of heat introduced into the firing chamber, per kg of material of the slabs (L), is considerable, in the order of 450Kcal/Kg. The containment casing of the firing chamber is therefore well insulated with respect to the external environment, by means of solutions known in the sector.

The zone of the firing module (3) in which the rapid cooling of the slabs (L) is achieved is located on the side of the outlet and comprises the outlet itself from the firing module (3). In a possible embodiment, the rapid cooling zone (32) is substantially free of heating means. Inside the rapid cooling zone (32) there is a means known in the sector suitable for conveying relatively cold air on the slabs to be cooled. Preferably, the rapid cooling zone (32) is separated from the rest of the firing module (3) by means of one or more insulating partitions, provided with openings to allow the transit of the slabs (L). These openings are aligned with each other along the advancement direction of the slabs (L). Advantageously, part of the heat transferred by the slabs (L) inside the rapid cooling zone (32) is conveyed inside the heating module (2).

The cooling module (4) is provided to cool the slabs (L) from the temperature at the exit from the firing module (3) up to the ambient temperature, or to temperatures below 150° or 100° C.

The cooling module (4) substantially comprises a containment casing, supported by a support frame, which encloses internally a cooling chamber (40), isolated with respect to the external environment. The cooling module (4) comprises at least one inlet opening, through which the slabs (L) can be introduced into the cooling chamber (40), and at least one outlet opening, through which the slabs (L) can be extracted from the cooling chamber (40).

The cooling means, known in the sector, is provided to extract heat from the cooling chamber (40), so as to cause a progressive and controlled cooling of the slabs (L), according to a predetermined time trend. Such cooling means may comprise the heat recovery circuit already mentioned above, configured to convey to the heating module (2) at least a part of the heat transferred by the slabs (L) into the cooling module (4) and/or at least a part of the heat dispersed by the firing module (3).

Inside the cooling module some important transformations take place in the material that forms the slabs (L), among which the transformation of the quartz, which takes place in cooling between about 650°C and 300°C. This cooling must be sufficiently gradual so that the quartz transformation process does not cause material breakages like in the cooling modules present in traditional kilns.

The cooling process of the slabs (L) must also take place in a controlled manner, through a decrease in temperature that presents a predetermined time trend. With the same mass of material, this time trend is substantially defined by the temperature present inside the cooling module (4) and by the speed with which the slabs (L) cross the cooling module (4).Preferably, the temperature is not uniform inside the cooling module (4), but decreases by proceeding from the inlet to the outlet. The combination of the temperature present inside the cooling module (4), albeit distributed, and the advancement speed of the slabs (L) substantially defines the decrease in the temperature of the slabs (L) over time. This trend will hereinafter be referred to as the cooling curve.

In a preferred embodiment, the cooling module (4) comprises a plurality of sub-modules (42), flanked to one another along the slab advancement direction (L). In particular, each sub-module (42) delimits, internally, a portion of the cooling chamber (40).

In a preferred configuration, each sub-module (42) could be separated from the adjacent sub-modules by means of insulating partitions provided with openings, aligned with each other along the advancement direction, to allow the transit of the slabs (L). In other words, the sub-modules (42) are separated from each other except for the openings through which the slabs (L) transit. Each sub-module (42) comprises its own cooling means, controllable independently of the cooling means of the other sub-modules (42), to allow the temperature of each sub-module (42) to be adjusted. In this embodiment, by adjusting the temperature inside each sub-module (42), it is possible to precisely control the cooling curve of the slabs (L) along the advancement direction. In essence, a certain temperature decrease is achieved inside each sub-module (42). Overall, the sequence of sub-modules (42) defines the cooling time curve of the slabs (L), from the temperature at the entry to the temperature at the exit from the heating module (4), also in relation to the advancement speed.

In practice, in order to obtain a given cooling curve of the slabs (L) it is possible to define a minimum number of sub-modules (42), each of which is responsible for achieving a certain temperature decrease, as part of the overall cooling from the inlet to the outlet of the cooling module (4).

Advantageously, the process chamber (C) comprises at least a first channel (C1) and at least a second channel (C2), thermally isolated from each other. Each of the two channels (C1,C2) extends along the advancement direction (Y) from the inlet opening (A) to the outlet opening (B).

In other words, the process chamber (C) is divided into at least two parts, thermally isolated from each other, which are defined by the first channel (C1) and by the second channel (C2). Each channel (C1,C2) is then arranged through the three heating, firing and cooling modules (2,3,4), i.e. each of the three modules (2,3,4) is in turn divided into a first portion, defined by the first channel (C1), and into a second portion, defined by the second channel (C2).

The transport system (T1,T2) comprises at least a first line (T1) and at least a second line (T2), respectively arranged along the first channel (C1) and along the second channel (C2) from the inlet opening (A) to the outlet opening (B).

The first channel (C1) and the second channel (C2) comprise respective temperature regulators, activatable and adjustable independently of each other. In essence, the temperature regulators of the first channel (C1) are provided to adjust the temperature inside the first channel (C1). Similarly, the temperature regulators of the second channel (C2) are provided to adjust the temperature inside the second channel (C2).

In practice, the temperature regulators of each channel (C1,C2) are able to control and adjust the temperature of each portion of the heating (2), firing (3) and cooling (4) modules, independently for each portion.

The provision of a process chamber (C) comprising at least the first channel (C1) and the second channel (C2) offers very significant advantages compared to the prior art.

Each channel (C1,C2), since it is thermally isolated from the other and is temperature controllable independently of the other, is able to process slabs (L) having different characteristics with respect to the other. In particular, each channel (C1,C2) can carry out its own firing cycle different from the firing cycle carried out by the other channel. The kiln is therefore able to process at least two types of slabs (L) simultaneously, each with its own firing cycle. By increasing the number of channels, obviously the number of types of slabs (L) that can be processed simultaneously is also increased.

Furthermore, it is possible that at least one of the channels (C1,C2) performs a continuous and longer firing cycle, for example for firing a batch comprising a large number of slabs (L). Another channel can be destined to the production of smaller batches, comprising a smaller number of slabs (L), and be subject to more frequent reconfigurations.

Another advantage of the process chamber (C) comprising at least a first channel (C1) and a second channel (C2) isolated from each other is to be able to control, besides the temperature, also the pressures generated inside each channel, so as to be able to be modulated in relation to the type of slabs (L) to be fired.

Preferably, the channels (C1,C2) are vertically superimposed on each other. This allows to occupy space in height, that is, in a more functional way inside a production plant.

The thermal insulation between the channels (C1,C2) can be obtained by means of an insulating separation wall (W), interposed between the channels (C1,C2) themselves. The insulating wall (W) is arranged substantially horizontally and parallel to the transport direction (Y). For the configuration of the insulating wall (W), numerous materials and numerous structures are available for the person skilled in the art.

As already pointed out, the transport system (T1,T2) comprises at least a first line (T1) and at least a second line (T2), respectively arranged along the first channel (C1) and along the second channel (C2) from the inlet opening (A) to the outlet opening (B). Advantageously, the first and second line (T1,T2) are operable independently of each other, to allow the slabs (L) to be transported at different speeds along the first channel (C1) and along the second channel (C2). This is particularly important, as it allows to adjust the speed inside each channel (C1,C2) according to the required firing cycle.

Each line (T1,T2) comprises at least one movable plane, arranged substantially horizontally. Each line (T1,T2) is provided with a motor means, known in the sector, provided to move the slabs (L) along the advancement direction (Y), from the inlet towards the outlet of the respective channel (C1,C2).

In a preferred embodiment, the movable slab support planes (L), known in the art, each comprise a plurality of rollers coplanar with each other, arranged with the rotation axes lying on a horizontal plane. The motor means of each line (T1,T2) is provided to rotate at least part or all of the rollers that form the respective movable plane. The rollers are preferably made of refractory material, or in any case resistant to the high temperatures present in the firing module (3).

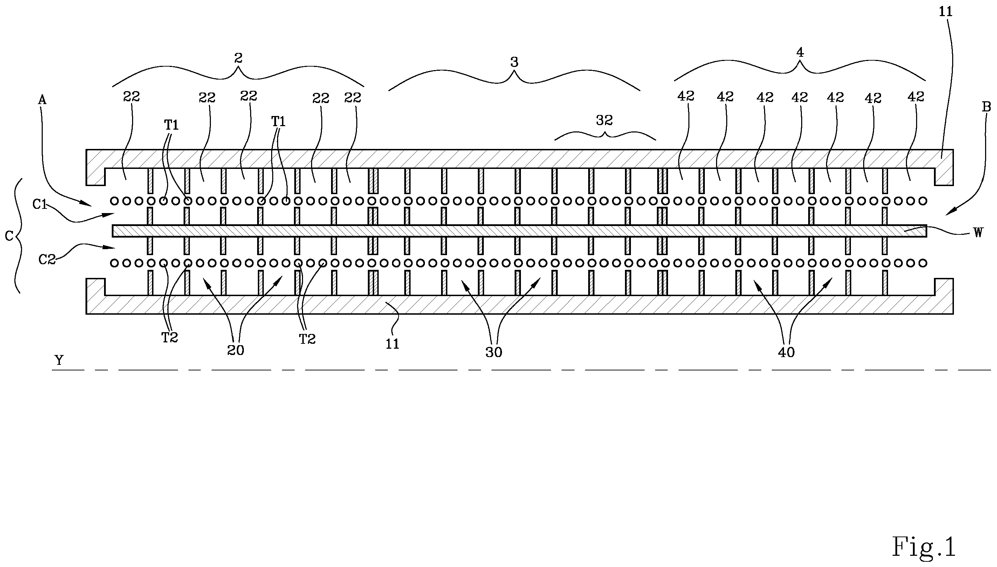

In the embodiment shown in figure 1, each line (T1,T2) comprises a single movable plane. In a possible embodiment, not shown, each line (T1,T2) comprises two or more movable planes, superimposed on each other and substantially horizontal. Each movable plane can be provided with a motor means that can be operated independently of the other movable planes.

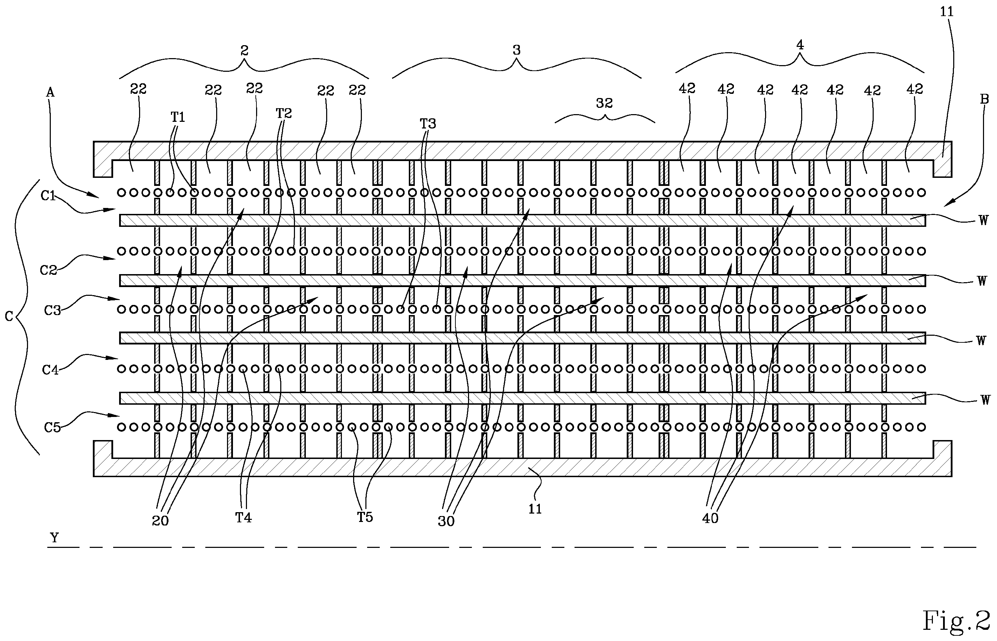

In the embodiment shown in figure 2, the process chamber (C) comprises five channels (C1,C2,C3,C4,C5), thermally insulated from each other by means of insulating walls (W). In particular, one of the insulating walls (W) is interposed between two adjacent channels. Each channel (C1,C2,C3,C4,C5) is provided with a respective line (T1,T2,T3,T4,T5), provided with a motor means that can be operated independently of the other lines. Also in the embodiment of figure 2, the channels (C1,C2) are preferably vertically superimposed on each other. This allows to occupy space in height, that is, in a more functional way inside a production plant.

The provision of five channels (C1,C2,C3,C4,C5) allows the kiln productivity to be multiplied accordingly. Each channel can be dedicated to the process of a product different from the others, implementing a firing cycle different from the others. Obviously two or more channels can be dedicated to the same product and implement the same firing cycle, depending on the specific production needs.

## Claims

1. A kiln for firing ceramic slabs (T) comprising:
a heating module (2), a firing module (3), a cooling module (4), consecutively connected to each other along an advancement direction (Y) of the slabs (L), which define a process chamber (C) provided with an inlet opening (A) and an outlet opening (B);
a transport system (T1,T2) arranged along the process chamber (C) from the inlet opening to the outlet opening, structured to transport the slabs (L) along the advancement direction (Y);
wherein the process chamber (C) comprises at least a first channel (C1) and at least a second channel (C2), thermally isolated from one another, each of which extends along the advancement direction (Y) from the inlet opening (A) to the outlet opening (B);
wherein the transport system (T1,T2) comprises at least a first transport line (T1) and at least a second transport line (T2), respectively arranged along the first channel (C1) and along the second channel (C2) from the inlet opening (A) to the outlet opening (B);
**characterised in that:**
the heating module (2) and/or the cooling module (4) comprise a plurality of sub-modules (22,42), flanked to one another along the slab advancement direction (Y);
each sub-module (22,42) is separated from the adjacent sub-modules by means of insulating partitions, provided with openings, aligned with each other along the advancement direction, to allow the transit of the slabs (L), and wherein each sub-module (22,42) is provided with temperature adjusting means independent of the other sub-modules (22,42).

2. The kiln according to claim 1, wherein the first channel (C1) and the second channel (C2) comprise respective temperature control means which are activatable and adjustable independently of one another.

3. The kiln according to claim 1, wherein the first and second line (T1,T2) are operable independently of one another.

4. The kiln according to one of the preceding claims, wherein the process chamber (C) comprises two or more channels (C1,C2,C3,C4,C5), thermally isolated from one another, each of which extends along the advancement direction (Y) from the inlet opening (A) to the outlet opening (B) and is provided with a respective transport line (T1,T2,T3,T4,T5).

5. The kiln according to claim 4, wherein each channel (C1,C2,C3,C4,C5) comprises own temperature control means, activatable and adjustable independently with respect to the temperature control means of the other channels.

6. The kiln according to claim 4, wherein the transport lines (T1,T2,T3,T4,T5) are operable independently of one another.

7. The kiln according to one of the preceding claims, wherein the heating module (2) comprises a plurality of sub-modules (22), flanked to one another along the advancement direction of the slabs (L) and separated from one another by means of isolating partitions, provided with openings, aligned to one another along the advancement direction, in order to enable the transit of the slabs (L), and wherein each sub-module (22) is provided with an own air recycling system independent of the other sub-modules (22).

8. Method for firing ceramic slabs, comprising the following steps:
introducing the slabs (T) into the kiln according to one of the preceding claims;
transporting the slabs (T) by means of said transport system (T1,T2) arranged along the process chamber (C) from said inlet opening (A) to said outlet opening (B) along said advancement direction (Y);
wherein the heating module (2) is provided to heat the slabs (L) up to a temperature of about 700°C, starting from the ambient temperature or from a temperature higher than the ambient temperature.

9. Method according to claim 8, wherein the firing module (3) is provided to heat the slabs (L) from the temperature at the exit from the heating module (2) to a temperature of about 1230°C.

10. Method according to claim 9, wherein the cooling module (4) is provided to cool the slabs (L) from the temperature at the exit from the firing module (3) up to the ambient temperature, or to a temperature below 150°C.

## Patentansprüche

1. Brennofen für keramische Platten (T), umfassend:
ein Heizmodul (2), ein Brennmodul (3), ein Kühlmodul (4), die nacheinander miteinander entlang einer Vorschubrichtung (Y) der Platten (L) verbunden sind, die eine Prozesskammer (C) bilden, die mit einer Einlassöffnung (A) und einer Auslassöffnung (B) versehen ist;
ein Transportsystem (T1, T2), das entlang der Prozesskammer (C) von der Einlassöffnung zur Auslassöffnung angeordnet und strukturiert ist, um die Platten (L) entlang der Vorschubrichtung (Y) zu transportieren,
wobei die Prozesskammer (C) mindestens einen ersten Kanal (C1) und mindestens einen zweiten Kanal (C2) umfasst, die thermisch voneinander getrennt sind, von denen ein jeder sich entlang der Vorschubrichtung (Y) von der Einlassöffnung (A) zur Auslassöffnung (B) erstreckt,
wobei das Transportsystem (T1, T2) mindestens eine erste Transportanlage (T1) und mindestens eine zweite Transportanlage (T2) umfasst, die jeweils entlang des ersten Kanals (C1) und entlang des zweiten Kanals (C2) von der Einlassöffnung (A) zur Auslassöffnung (B) angeordnet sind,
**dadurch gekennzeichnet, dass**
das Heizmodul (2) und/oder das Kühlmodul (4) eine Vielzahl von Untermodulen (22, 42) umfassen, die entlang der Plattenvorschubrichtung (Y) nebeneinander angeordnet sind,
wobei ein jedes Untermodul (22, 42) von den angrenzenden Untermodulen durch Isolierungsunterteilungen getrennt ist, versehen mit Öffnungen, die fluchtend zueinander entlang der Vorschubrichtung angeordnet sind, um das Durchlaufen der Platten (L) zu erlauben, und wobei ein jedes Untermodul (22, 42) unabhängig von den anderen Untermodulen (22, 42) mit Temperatureinstellmitteln versehen ist.

2. Brennofen nach Anspruch 1, wobei der erste Kanal (C1) und der zweite Kanal (C2) jeweilige Temperaturregelungsmittel umfassen, die unabhängig voneinander aktivierbar und einstellbar sind.

3. Brennofen nach Anspruch 1, wobei die erste und die zweite Anlage (T1, T2) unabhängig voneinander bedienbar sind.

4. Brennofen nach einem der vorhergehenden Ansprüche, wobei die Prozesskammer (C) zwei oder mehrere Kanäle (C1, C2, C3, C4, C5) umfasst, die thermisch voneinander getrennt sind, von denen ein jeder sich entlang der Vorschubrichtung (Y) von der Einlassöffnung (A) zur Auslassöffnung (B) erstreckt und mit einer jeweiligen Transportanlage (T1, T2, T3, T4, T5) versehen ist.

5. Brennofen nach Anspruch 4, wobei ein jeder Kanal (C1, C2, C3, C4, C5) eigene Temperaturregelungsmittel umfasst, die in Bezug auf die Temperaturregelungsmittel der anderen Kanäle unabhängig aktivierbar und einstellbar sind.

6. Brennofen nach Anspruch 4, wobei die Transportanlagen (T1, T2, T3, T4, T5) unabhängig voneinander bedienbar sind.

7. Brennofen nach einem der vorhergehenden Ansprüche, wobei das Heizmodul (2) eine Vielzahl von Untermodulen (22) umfasst, die entlang der Vorschubrichtung der Platten (L) nebeneinander angeordnet und voneinander durch Isolierungsunterteilungen getrennt sind, versehen mit Öffnungen, die fluchtend zueinander entlang der Vorschubrichtung angeordnet sind, um das Durchlaufen der Platten (L) zu erlauben, und wobei ein jedes Untermodul (22) unabhängig von den anderen Untermodulen (22) mit einem eigenen Luftrückgewinnungssystem versehen ist.

8. Verfahren zum Brennen von keramischen Platten, umfassend die folgenden Schritte:
Einführen der Platten (T) in den Brennofen nach einem der vorhergehenden Ansprüche;
Transportieren der Platten (T) mittels des Transportsystems (T1, T2), das entlang der Prozesskammer (C) angeordnet ist, von der Einlassöffnung (A) zur Auslassöffnung (B) entlang der Vorschubrichtung (Y),
wobei das Heizmodul (2) bereitgestellt ist, um die Platten (L) bis zu einer Temperatur von ungefähr 700 °C zu erhitzen, ausgehend von der Umgebungstemperatur oder von einer Temperatur, die höher als die Umgebungstemperatur ist.

9. Verfahren nach Anspruch 8, wobei das Brennmodul (3) bereitgestellt ist, um die Platten (L) von einer Temperatur am Ausgang vom Heizmodul (2) auf eine Temperatur von ungefähr 1230 °C zu erhitzen.

10. Verfahren nach Anspruch 9, wobei das Kühlmodul (4) bereitgestellt ist, um die Platten (L) von einer Temperatur am Ausgang vom Brennmodul (3) auf die Umgebungstemperatur oder auf eine Temperatur unter 150 °C zu kühlen.

## Revendications

1. Four servant à cuire des dalles de céramique (T), comprenant :
un module de chauffage (2), un module de cuisson (3), un module de refroidissement (4), reliés consécutivement l'un à l'autre le long d'une direction d'avancement (Y) des dalles (L), qui définissent une chambre de traitement (C) munie d'une ouverture d'entrée (A) et d'une ouverture de sortie (B) ;
un système de transport (T1, T2) agencé le long de la chambre de traitement (C) de l'ouverture d'entrée à l'ouverture de sortie, structuré pour transporter les dalles (L) le long de la direction d'avancement (Y) ;
dans lequel la chambre de traitement (C) comprend au moins un premier canal (C1) et au moins un second canal (C2), isolés thermiquement l'un de l'autre, dont chacun s'étend le long de la direction d'avancement (Y) de l'ouverture d'entrée (A) à l'ouverture de sortie (B) ;
dans lequel le système de transport (T1, T2) comprend au moins une première ligne de transport (T1) et au moins une seconde ligne de transport (T2), respectivement agencées le long du premier canal (C1) et le long du second canal (C2) de l'ouverture d'entrée (A) à l'ouverture de sortie (B) ;
**caractérisé en ce que**
le module de chauffage (2) et/ou le module de refroidissement (4) comprennent une pluralité de sous-modules (22, 42), flanqués les uns aux autres le long de la direction d'avancement des dalles (Y) ;
chaque sous-module (22, 42) est séparé des sous-modules adjacents au moyen de cloisons isolantes, pourvues d'ouvertures, alignées les unes avec les autres le long de la direction d'avancement, pour permettre le passage des dalles (L), et dans lequel chaque sous-module (22, 42) est pourvu de moyens de réglage de température indépendants des autres sous-modules (22, 42).

2. Four selon la revendication 1, dans lequel le premier canal (C1) et le second canal (C2) comprennent des moyens de commande de température respectifs qui sont activables et réglables indépendamment l'un de l'autre.

3. Four selon la revendication 1, dans lequel la première et la seconde ligne (T1, T2) peuvent fonctionner indépendamment l'une de l'autre.

4. Four selon l'une quelconque des revendications précédentes, dans lequel la chambre de traitement (C) comprend deux ou plusieurs canaux (C1, C2, C3, C4, C5), isolés thermiquement les uns des autres, dont chacun s'étend le long de la direction d'avancement (Y) de l'ouverture d'entrée (A) à l'ouverture de sortie (B) et est pourvu d'une ligne de transport respective (T1, T2, T3, T4, T5).

5. Four selon la revendication 4, dans lequel chaque canal (C1, C2, C3, C4, C5) comprend ses propres moyens de commande de température, activables et réglables indépendamment par rapport aux moyens de commande de température des autres canaux.

6. Four selon la revendication 4, dans lequel les lignes de transport (T1, T2, T3, T4, T5) peuvent fonctionner indépendamment les unes des autres.

7. Four selon l'une quelconque des revendications précédentes, dans lequel le module de chauffage (2) comprend une pluralité de sous-modules (22), flanqués les uns aux autres le long de la direction d'avancement des dalles (L) et séparés les uns des autres au moyen de cloisons isolantes, pourvues d'ouvertures, alignées les unes par rapport aux autres le long de la direction d'avancement, afin de permettre le passage des dalles (L), et dans lequel chaque sous-module (22) est pourvu d'un système de recyclage d'air propre indépendant des autres sous-modules (22).

8. Procédé servant à cuire des dalles de céramique, comprenant les étapes suivantes :
introduire les dalles (T) dans le four selon l'une des revendications précédentes ;
transporter les dalles (T) au moyen dudit système de transport (T1, T2) agencé le long de la chambre de traitement (C) de ladite ouverture d'entrée (A) à ladite ouverture de sortie (B) le long de ladite direction d'avancement (Y) ;
dans lequel le module de chauffage (2) est prévu pour chauffer les dalles (L) jusqu'à une température d'environ 700 °C, à partir de la température ambiante ou d'une température supérieure à la température ambiante.

9. Procédé selon la revendication 8, dans lequel le module de cuisson (3) est prévu pour chauffer les dalles (L) de la température à la sortie du module de chauffage (2) à une température d'environ 1230 °C.

10. Procédé selon la revendication 9, dans lequel le module de refroidissement (4) est prévu pour refroidir les dalles (L) de la température à la sortie du module de cuisson (3) jusqu'à la température ambiante, ou à une température inférieure à 150 °C.
